# EUROPEAN PATENT SPECIFICATION

(11) **EP 3 564 011 B1**
(45) Date of publication and mention of the grant of the patent: **11.05.2022**
(21) Application number: 19178759.7
(22) Date of filing: 29.03.2018
(51) Int. Cl.: B29C 63/02

(54) **SCREEN FILM STRUCTURE AND METHOD FOR ATTACHING SCREEN FILM ONTO MOBILE DEVICE**
FOLIENFILMSTRUKTUR UND VERFAHREN ZUR ANBRINGUNG EINES FOLIENFILMS AUF EINER MOBILEN VORRICHTUNG
STRUCTURE DE FILM D'ÉCRAN ET PROCÉDÉ DE FIXATION DE FILM D'ÉCRAN SUR DISPOSITIF MOBILE

(30) Priority: 31.03.2017 TW 106204611 U; 11.08.2017 TW 106211912 U
(43) Date of publication of application: 06.11.2019
(62) Divisional of application: 18165116.7
(73) Proprietor: Lin, Chia-Ching, Taipei City 104 (TW)
(72) Inventor: Lin, Chia-Ching, Taipei City 104 (TW)
(74) Representative: Viering, Jentschura & Partner mbB Patent- und Rechtsanwälte

(56) References cited:
- WO-A1-2015/095856
- CN-U- 202 923 909
- US-A1- 2014 338 829
- US-A1- 2015 047 773

## Description

### BACKGROUND OF THE DISCLOSURE

### Field of the Disclosure

The present disclosure relates to a screen film; in particular, to a screen film structure having a positioning function and a method for attaching a screen film onto a mobile device.

### Description of Related Art

A conventional screen film structure includes a screen film and two release films respectively adhered to two opposite surfaces of the screen film, and a peripheral edge of each of the two release films is aligned with that of the screen film. Moreover, when the conventional screen film structure is applied to an electronic device, one of the two release films needs to be torn away from the screen film, and then the screen film is adhered onto a screen of the electronic device by a user's observation.

However, since the above adhering process of the conventional screen film and the screen is achieved by a user's observation, the conventional screen film cannot be accurately adhered onto the screen due to observation error or finger jitter. Therefore, there is still room for improvement for the conventional screen film structure.

US 2014/338829 A1 discloses a screen film structure, comprising: a transparent screen film having a first surface and a second surface opposite to the first surface; a first release film including: a first main portion detachably adhered to the first surface of the screen film, wherein a peripheral edge of the first main portion is substantially aligned with a peripheral edge of the screen film; and a first aligning portion connected to the first main portion and protruding out of the screen film, wherein the first aligning portion has a plurality of first positioning holes; and a second release film detachably adhered to the second surface of the screen film, wherein the screen film is a soft screen film, the peripheral edge of the screen film includes two long lateral edges parallel to each other and two short lateral edges parallel to each other. Another screen film structure is disclosed in US 2015/047773 A1.

### SUMMARY OF THE DISCLOSURE

The present disclosure provides a screen film structure and a method for attaching a screen film onto a mobile device to solve the drawbacks associated with conventional screen film structures.

According to a first aspect of the present invention, a screen film structure as defined in claim 1 is provided. According to a second aspect of the present invention, a method as defined in claim 5 is provided. The dependent claims show some examples of such a screen film structure and method, respectively. The applicant reserves the right to direct claims to third and/or fourth aspect of the present invention, and the respective embodiments thereof, as well as the respective examples of the embodiments thereof.

The present disclosure discloses a screen film structure, which includes a transparent screen film, a first release film, and a second release film. The transparent screen film has a first surface and a second surface opposite to the first surface. The first release film includes a first main portion and a first aligning portion. The first main portion is detachably adhered to the first surface of the screen film. A peripheral edge of the first main portion is substantially aligned with a peripheral edge of the screen film. The first aligning portion is connected to the first main portion and protruding out of the screen film. The first aligning portion has a plurality of first positioning holes. The second release film is detachably adhered to the second surface of the screen film.

The present disclosure further discloses a method for attaching a screen film onto a mobile device, and the method includes a preparing step, a clamping step, a film aligning step, and an attaching step. The preparing step is implemented by providing a screen film applicator and the screen film structure as disclosed in the above description. Moreover, the screen film is further limited to a glass screen film, the peripheral edge of the screen film includes two long lateral edges parallel to each other and two short lateral edges parallel to each other, and the first aligning portion protrudes out of one of the two long lateral edges. The screen film applicator includes a seat, a plurality of positioning pillars, and a clamping mechanism. The seat includes an accommodating trough recessed in a top surface thereof, and the accommodating trough has a long inner wall and a short inner wall. The positioning pillars extend from the top surface of the seat and are arranged adjacent to the long inner wall of the seat. The clamping mechanism is movably arranged in the accommodating trough. The clamping step is implemented by placing a mobile device in the accommodating trough and using the clamping mechanism to press the mobile device to abut against the long inner wall and the short inner wall. A screen of the mobile device faces toward a direction away from the seat. The film aligning step is implemented by taking the second release film to face the screen of the mobile device and taking the first release film to dispose the positioning pillars in the first positioning holes of the first release film. The attaching step is implemented by tearing the second release film away from the second surface of the screen film and then adhering the second surface of the screen film onto the screen of the mobile device.

The present disclosure further discloses a method for attaching a screen film onto a mobile device, and the method includes a preparing step, a clamping step, a film aligning step, and an attaching step. The preparing step is implemented by providing a screen film applicator and the screen film structure as disclosed in the above description. Moreover, the screen film is further limited to a soft screen film. The peripheral edge of the screen film includes two long lateral edges parallel to each other and two short lateral edges parallel to each other. The first aligning portion protrudes out of one of the two short lateral edges. The first positioning holes are staggeredly arranged in two rows, and each of the two rows of the first positioning holes is substantially perpendicular to each of the two long lateral edges. Each of the first release film and the second release film is a bendable soft release film. The second release film includes a second main portion and a second aligning portion connected to the second main portion and protruding out of the screen film. The second main portion is detachably adhered to the second surface of the screen film. The peripheral edge of the first main portion is substantially aligned with a peripheral edge of the screen film. The second aligning portion has a plurality of second positioning holes arranged closer to an edge of the second aligning portion than to the second main portion, and the second positioning holes are respectively aligned with the first positioning holes. The screen film applicator includes a seat, a plurality of first fixing pillars, a clamping mechanism, and a film attaching mechanism. The seat includes an accommodating trough recessed in a top surface thereof, and the accommodating trough has a long inner wall and a short inner wall. The first fixing pillars extend from the top surface of the seat and are arranged adjacent to the shot inner wall of the seat. The clamping mechanism is movably arranged in the accommodating trough. The film attaching mechanism is movably disposed on the seat and includes a rolling shaft, a plurality of second fixing pillars formed on the rolling shaft, and a flatly pressing roller. When the film attaching mechanism is moved along a longitudinal direction of the long inner wall relative to the seat, the rolling shaft spins around an axis of the rolling shaft, and the flatly pressing roller spins around an axis of the flatly pressing roller. The clamping step is implemented by placing a mobile device in the accommodating trough and using the clamping mechanism to press the mobile device to abut against the long inner wall and the short inner wall. A screen of the mobile device faces toward a direction away from the seat, and a side of the mobile device is located between the first fixing pillars and the clamping mechanism. The side of the mobile device located between the first fixing pillars and the clamping mechanism can be a side of the mobile device that is further away from the clamping mechanism than another side of the mobile device opposite to the side is. The film aligning step is implemented by taking the first release film to dispose the first fixing pillars in the first positioning holes of the first release film and taking the second release film to dispose the second fixing pillars in the second positioning holes of the second release film. The rolling shaft and the flatly pressing roller are respectively located at two opposite sides of the screen film. The attaching step is implemented by moving the film attaching mechanism toward the clamping mechanism, so that the rolling shaft spins to gradually tear the second release film away from the second surface of the screen film and to roll the second release film around the rolling shaft, and the flatly pressing roller spins to gradually presses the second surface of the screen film onto the screen of the mobile device from an end to an opposite end of the screen.

In summary, the screen film structure of the present disclosure is provided with a positioning function by forming a plurality of first positioning holes on the first aligning portion of the first release film protruding out of the screen film, thereby effectively improving the inadequacies associated with conventional screen film, which cannot be accurately adhered onto a screen due to observation error or finger jitter.

In order to further appreciate the characteristics and technical contents of the present disclosure, references are hereunder made to the detailed descriptions and appended drawings in connection with the present disclosure. However, the appended drawings are merely shown for exemplary purposes, and should not be construed as restricting the scope of the present disclosure.

### BRIEF DESCRIPTION OF THE DRAWINGS

Fig. 1 is a perspective view showing a screen film structure according to a first design, with the first design not having all features of claim 1.
Fig. 2 is a planar view of Fig. 1.
Fig. 3 is an exploded view of Fig. 1.
Fig. 4 is a cross-sectional view taken along a cross-sectional line IV-IV of Fig. 2.
Fig. 5 is a schematic view showing a screen film applicator and a screen film structure clamping a mobile device and aligning a screen film according to the first design.
Figs. 6 to 8 are schematic views showing the screen film applicator and the screen film structure attaching the screen film according to the first design.
Fig. 9 is a perspective view showing a screen film structure according to a second embodiment of the present disclosure.
Fig. 10 is a planar view of Fig. 9.
Fig. 11 is an exploded view of Fig. 9.
Fig. 12 is a cross-sectional view taken along a cross-sectional line XII- XII of Fig. 10.
Fig. 13 is a schematic view showing a screen film applicator and a screen film structure according to the second embodiment of the present disclosure.
Fig. 14 is a schematic view showing the screen film applicator and the screen film structure clamping a mobile device and aligning a screen film according to the second embodiment of the present disclosure.
Figs. 15 and 16 are schematic views showing the screen film applicator and the screen film structure attaching the screen film according to the second embodiment of the present disclosure.
Fig. 17 is a perspective view showing a screen film structure according to a third embodiment of the present disclosure.
Fig. 18 is an exploded view of Fig. 17.
Fig. 19 is a perspective view showing a screen film structure according to a fourth embodiment of the present disclosure.
Fig. 20 is an exploded view of Fig. 19.

### DETAILED DESCRIPTION OF THE EMBODIMENTS

References are hereunder made to the detailed descriptions and appended drawings in connection with the present disclosure. However, the appended drawings are merely provided for exemplary purposes, and should not be construed as restricting the scope of the present disclosure.

### First Design

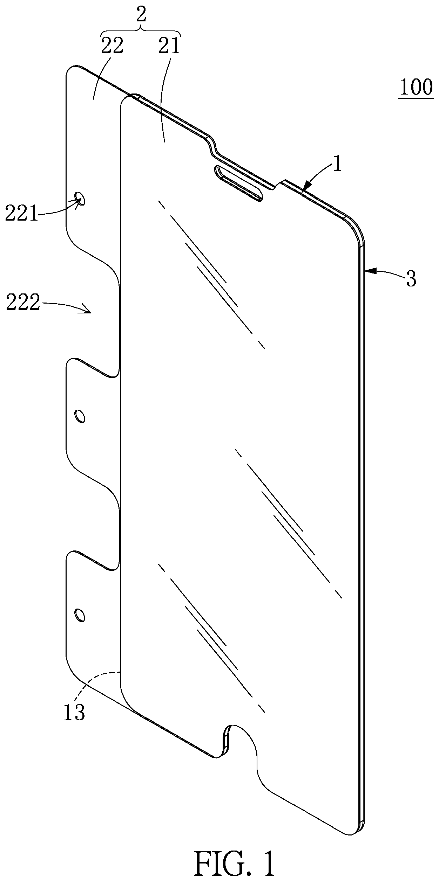

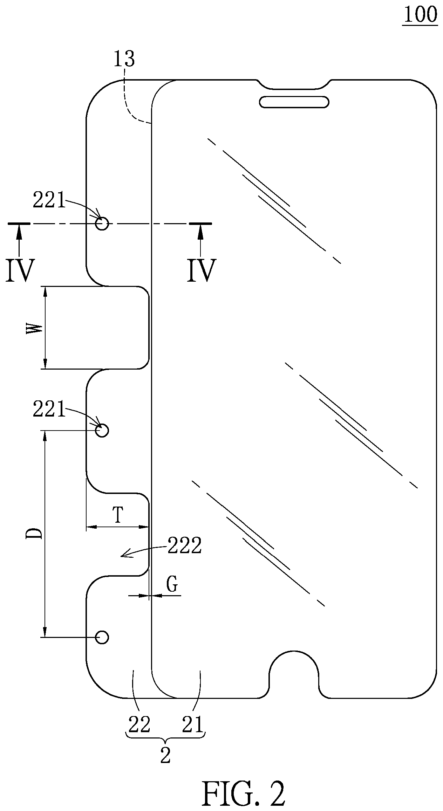

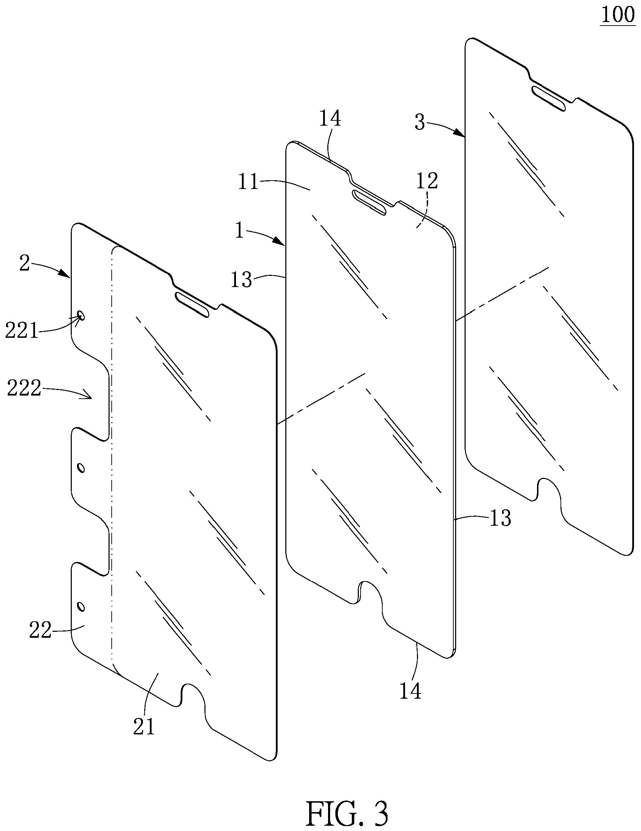

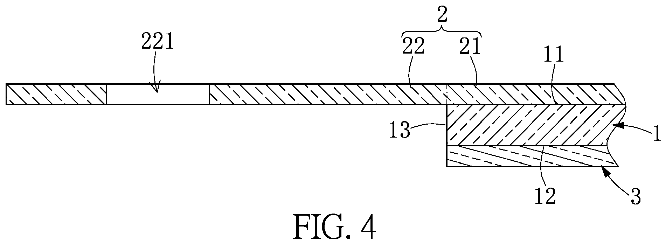

Reference is made to Figs. 1 to 8, which illustrate a first design. The present first designdiscloses a screen film structure 100 and a method for attaching a screen film onto a mobile device. In the present embodiment, the implementation of the method is related to the screen film structure 100. To facilitate a better understanding of the present embodiment, the following description discloses the screen film structure 100, and then discloses the method.

As shown in Figs. 1 to 4, the screen film structure 100 includes a transparent screen film 1, a first release film 2, and a second release film 3. The first release film 2 and the second release film 3 are respectively and detachably adhered to two opposite surfaces of the screen film 1. Each of the first release film 2 and the second release film 3 can be a soft release film or a hard release film, and can be transparent, semi-transparent, or non-transparent, but the present disclosure is not limited thereto. The following description discloses the structure and connection relationships of each component of the screen film structure 100.

The screen film 1 is transparent, and has a first surface 11 and a second surface 12 opposite to the first surface 11. The screen film 1 of the present embodiment is a hard screen film (e.g., a glass screen film). A peripheral edge of the screen film 1 includes two long lateral edges 13 parallel to each other and two short lateral edges 14 parallel to each other. It should be noted that the screen film 1 is applied to be adhered onto a screen of a mobile device (e.g., a smart phone), so that the shape of the screen film 1 can be changed according to shape of the screen or other design requirements. And the present disclosure is therefore not limited by such in any way.

The first release film 2 in the present embodiment is integrally formed as a one-piece structure, and includes a first main portion 21 and a first aligning portion 22 connected to the first main portion 21. The first main portion 21 substantially corresponds in shape to the screen film 1. That is to say a peripheral edge of the first main portion 21 is substantially aligned with the peripheral edge of the screen film 1. The first main portion 21 is detachably adhered to the first surface 11 of the screen film 1.

Moreover, the first aligning portion 22 protrudes out of the screen film 1. The first aligning portion 22 has a plurality of first positioning holes 221, so that the screen film structure 100 can be provided with a positioning function by the first positioning holes 221. Specifically, a length of the first aligning portion 22 is substantially equal to that of each of the two long lateral edges 13, the first aligning portion 22 protrudes out of one of the two long lateral edges 13, and any two of the first positioning holes 221 arranged adjacent to each other have the same distance D, but the present disclosure is not limited thereto.

Moreover, a portion of the first aligning portion 22 between any two of the first positioning holes 221 arranged adjacent to each other includes a fingertip trough 222 recessed in an outer edge of the first aligning portion. Each of the fingertip troughs 222 has a width W preferably within a range of 15-25 mm, and a depth T preferably within a range of 13-16 mm, so that the fingertip troughs 222 of the first release film 2 provides a space for a user's fingers to hold the screen film structure 100. Each of the fingertip troughs 222 has a bottom spaced apart from the screen film 1 by a spacing G, so that when the screen film structure 100 is hold by pinching the bottom of each of the fingertip troughs 222 and an edge of the screen film structure 100 opposite to the first aligning portion 22, the screen film 1 and each of the first positioning holes 221 are not squeezed for maintaining the original shape thereof.

In addition, each of the fingertip troughs 222 in the present embodiment is a rectangular trough, but the present disclosure is not limited thereto. For example, in other embodiments of present disclosure, the fingertip trough 222 can be a square trough, a circular trough, or irregular trough, the latter one of which corresponds in shape to a fingertip.

The second release film 3 in the present embodiment is integrally formed as a one-piece structure. The second release film 3 substantially corresponds in shape to the screen film 1. That is to say, a peripheral edge of the second release film 3 is substantially aligned with the peripheral edge of the screen film 1. The second release film 3 is detachably adhered to the second surface 12 of the screen film 1.

Moreover, the shape of the screen film 1 can be changed according to a corresponding screen, and the first release film 2 and the second release film 3 can be changed in shape according to the screen film 1. The following description discloses some varied configurations of the screen film structure 100, but the present disclosure is not limited thereto.

For example, the screen film 1 can only be adhered onto a displaying portion of the screen, each of the first release film 2 and the second release film 3 can be a soft release film (e.g., a Polyethylene Terephthalate (PET) film), a thickness of the first release film 2 is preferably less than 0.3 mm (e.g., 0.2 mm), and a thickness of the second release film 3 is preferably less than 0.1 mm (e.g., 0.05 mm). That is to say, the thickness of the first release film 2 is preferably larger than that of the second release film 3.

In other embodiments of the present disclosure, when the screen includes a flat portion and an arced portion arranged around the flat portion, the screen film 1 can be adhered only onto the flat portion, or can be adhered onto the flat portion and the arced portion. Moreover, the first release film 2 can be a soft release film (e.g., a PET film), and a thickness of the first release film 2 is preferably less than 0.3 mm (e.g., 0.2 mm); the second release film 3 can be a hard release film (e.g., a Polycarbonate (PC) film), and a thickness of the second release film 3 is preferably less than 0.8 mm (e.g., 0.5 mm).

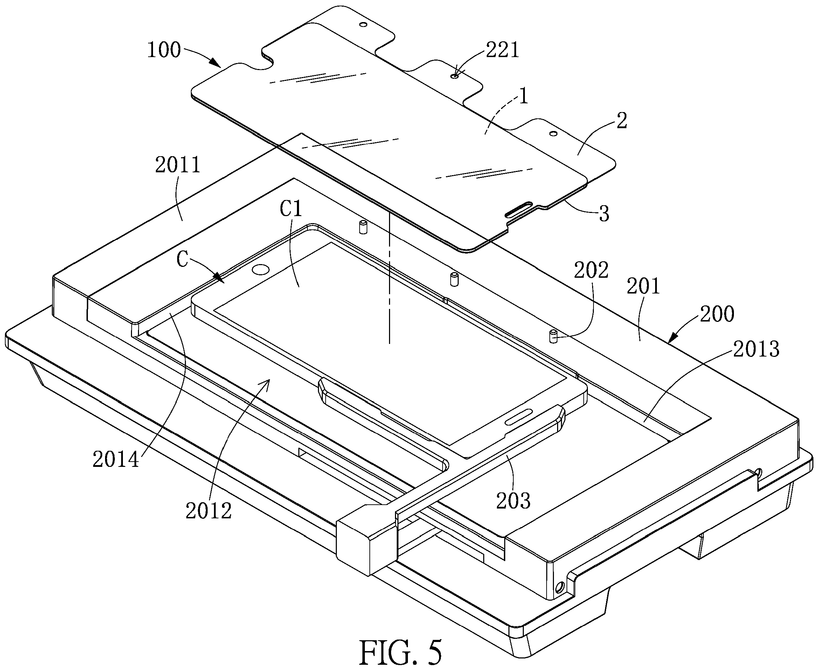

The screen film structure 100 has been disclosed in the above description, and the following description discloses the method of the present embodiment. As shown in Figs. 5 to 8, the method of the present embodiment includes a preparing step, a clamping step, a film aligning step S130, and an attaching step. The above steps can be adjusted or changed according to design requirements, and the method of the present disclosure is not limited thereto.

Referring to Fig. 5, the preparing step is implemented by providing a screen film applicator 200 and the screen film structure 100. The structure of the screen film applicator 200 is briefly disclosed as follows, but the present disclosure is not limited thereto. The screen film applicator 200 includes a seat 201, a plurality of positioning pillars 202, and a clamping mechanism 203.

Specifically, the seat 201 includes an accommodating trough 2012 recessed in a top surface 2011 thereof, and the accommodating trough 2012 has a long inner wall 2013 and a short inner wall 2014 substantially perpendicular to the long inner wall 2013. The positioning pillars 202 extend from the top surface 2011 of the seat 201 and are arranged adjacent to the long inner wall 2013 of the seat 201. The clamping mechanism 203 is movably arranged in the accommodating trough 2012.

Referring to Fig. 5, the clamping step is implemented by placing a mobile device C in the accommodating trough 2012 of the seat 201 and using the clamping mechanism 203 to press the mobile device C to abut against the long inner wall 2013 and the short inner wall 2014 of the seat 201. Moreover, a screen C1 of the mobile device C faces toward a direction away from the seat 2012.

Referring to Fig. 5, the film aligning step is implemented by taking the second release film 3 to face the screen C1 of the mobile device C and taking the first release film 2 to dispose the positioning pillars 202 of the screen film applicator 200 in the first positioning holes 221 of the first release film 2. Moreover, since the relative position between the seat 201 and each of the positioning pillars 202 is fixed, the screen film 1 is accurately aligned with the mobile device C abutted against the long inner wall 2013 and the short inner wall 2014 by taking the first release film 2 to dispose the positioning pillars 202 in the first positioning holes 221 of the first release film 2. Specifically, each of the positioning pillars 202 cannot be moved relative to the corresponding first positioning hole 221.

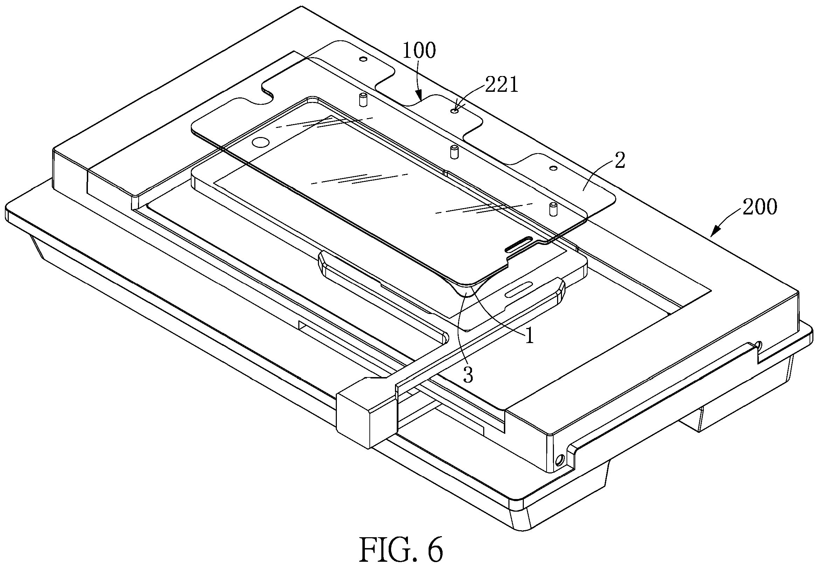

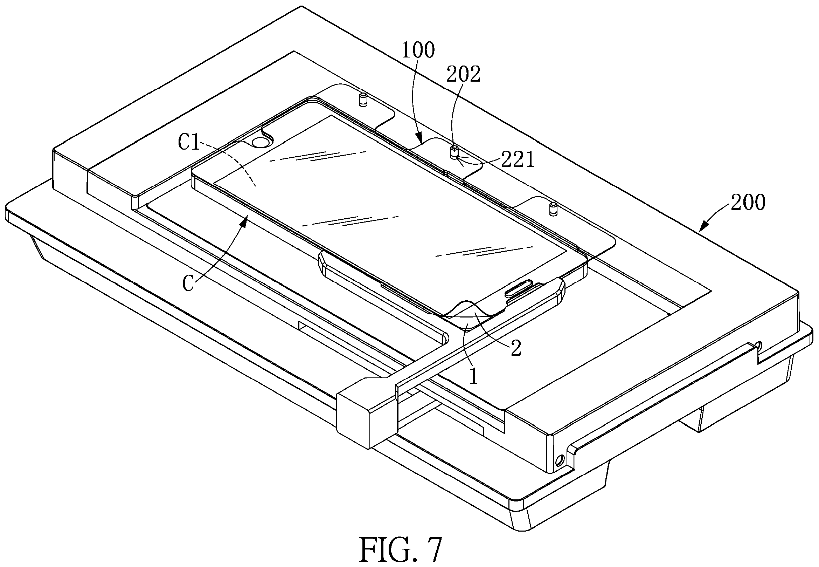

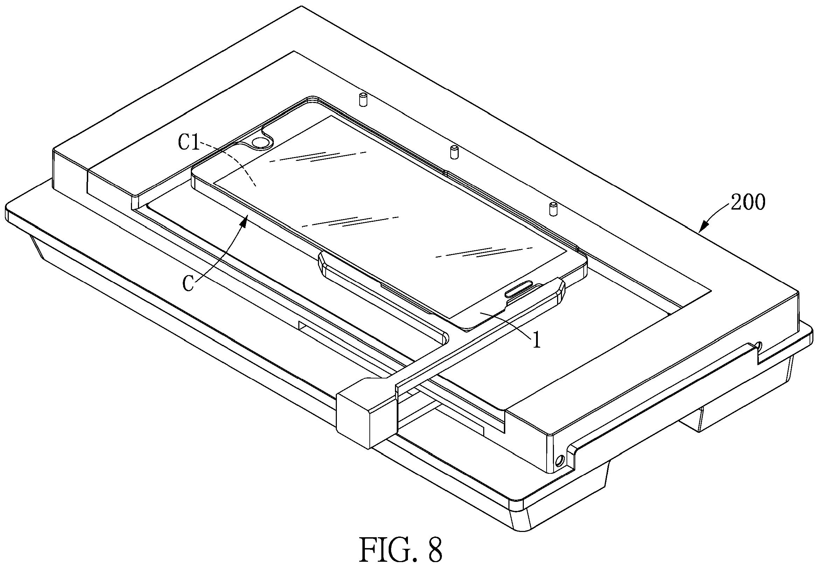

Referring to Figs. 6 to 8, the attaching step is implemented by tearing the second release film 3 away from the second surface 12 of the screen film 1 (as shown in Fig. 6) and then adhering the second surface 12 of the screen film 1 onto the screen C1 of the mobile device C (as shown in Fig. 7). Finally, the first release film 2 is torn away from the first surface 11 of the screen film 1 (as shown in Fig. 7), thereby obtaining a mobile device C accurately adhered with the screen film 1 (as shown in Fig. 8).

It should be noted that the screen film structure 100 is applied by implementing the method of the present embodiment, but the present disclosure is not limited thereto. In other embodiments of the present disclosure, the screen film structure 100 can be applied to a screen C1 of a mobile device C by implementing other methods.

### Second Embodiment

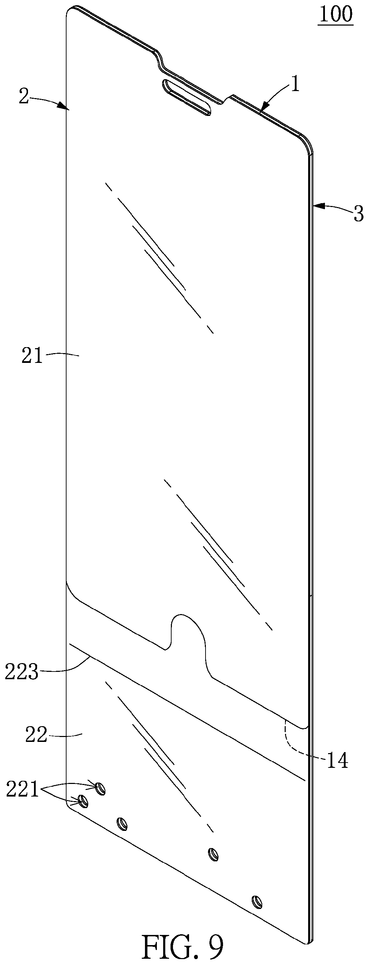

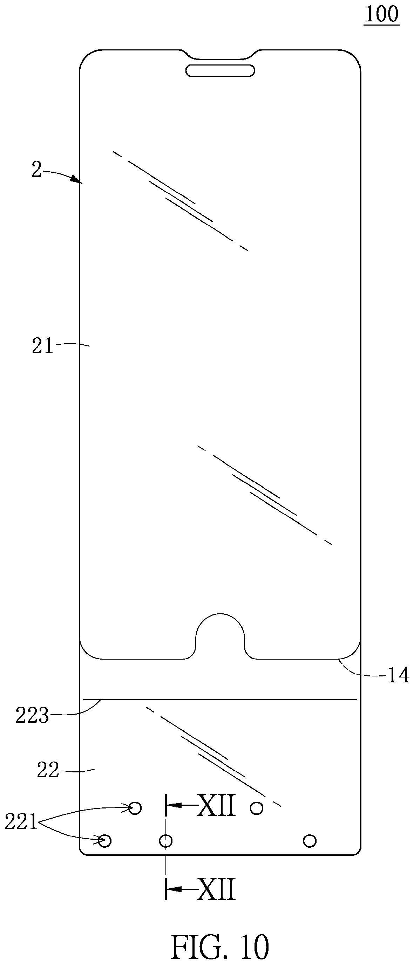

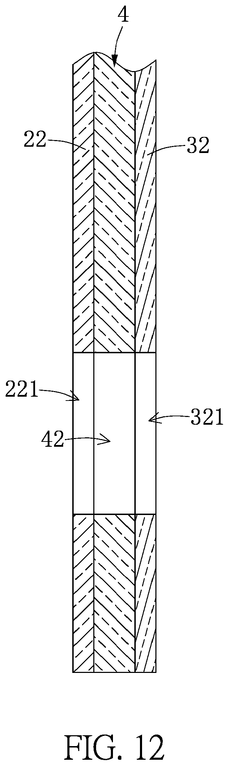

Reference is made to Figs. 9 to 16, which illustrate a second embodiment of the present disclosure. The present embodiment discloses a screen film structure 100 and a method for attaching a screen film onto a mobile device. In the present embodiment, the implementation of the method is related to the screen film structure 100. Moreover, the screen film structure 100 in the present embodiment is a flat structure, but the present disclosure is not limited thereto. For example, in other embodiments of the present disclosure, a periphery portion of the screen film structure 100 can be a curved structure. To facilitate a better understanding of the present embodiment, the following description discloses the screen film structure 100, and then discloses the method.

As shown in Figs. 9 to 12, the screen film structure 100 includes a transparent screen film 1, a partition 4, a first release film 2, and a second release film 3. The first release film 2 and the second release film 3 are respectively and detachably adhered to two opposite surfaces of the screen film 1, and are respectively and detachably adhered to two opposite surfaces of the partition 4. Each of the first release film 2 and the second release film 3 can be a soft release film or a hard release film, and can be transparent, semi-transparent, or non-transparent, but the present disclosure is not limited thereto. The following description discloses the structure and connection relationships of each component of the screen film structure 100.

The screen film 1 has a first surface 11 and a second surface 12 opposite to the first surface 11. The screen film 1 of the present embodiment is a bendable soft screen film. A peripheral edge of the screen film 1 includes two long lateral edges 13 parallel to each other and two short lateral edges 14 parallel to each other. It should be noted that the screen film 1 is applied to be adhered onto a screen of a mobile device (e.g., a smart phone), so that the shape of the screen film 1 can be changed according to shape of the screen or other design requirements. And the present disclosure is therefore not limited by such in any way.

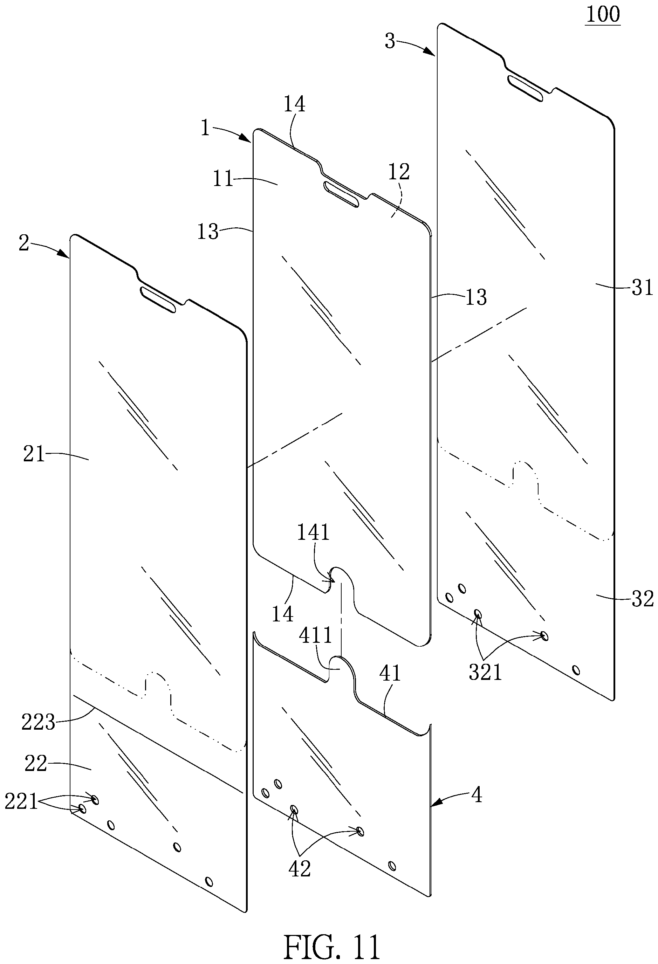

A thickness of the partition 4 is substantially equal to that of the screen film 1. A peripheral edge of the partition 4 has an edge 41 (i.e., a top edge of the partition 4 as shown in Fig. 11) in complementation with one of the two short lateral edges 14 of the screen film 1. That is to say, the edge 41 of the partition 4 is detachably engaged with the corresponding short lateral edge 14. Two opposite lateral edges of the peripheral edge of the partition 4 connected to the edge 41 are respectively flush with the two long lateral edges 13 of the screen film 1. A portion of the partition 4 closer to an edge of the partition 4 opposite to the edge 41 than to the edge 41 (i.e., a bottom portion of the partition 4 as shown in Fig. 11) has a plurality of thru-holes 42. The thru-holes 42 are staggeredly arranged in two rows, and each of the two rows of the thru-holes 42 is substantially perpendicular to each of the two long lateral edges 13, but the present disclosure is not limited thereto.

Specifically, the short lateral edge 14 of the screen film 1 corresponding to the partition 4 has a notch 141, the edge 41 of the partition 4 has a protruding sheet 411 corresponding in shape to the notch 141, and the protruding sheet 411 is engaged with the notch 141. In other words, the edge 41 of the partition 4 is formed according to the corresponding short lateral edge 14 of the screen film 1.

The first release film 2 in the present embodiment is integrally formed as a one-piece structure, and includes a first main portion 21 and a first aligning portion 22 connected to the first main portion 21. The first main portion 21 substantially corresponds in shape to the screen film 1. That is to say, a peripheral edge of the first main portion 21 is substantially aligned with the peripheral edge of the screen film 1. The first main portion 21 is detachably adhered to the first surface 11 of the screen film 1.

Moreover, the first aligning portion 22 protrudes out of the screen film 1. The first aligning portion 22 has a plurality of first positioning holes 221, so that the screen film structure 100 can be provided with a positioning function by the first positioning holes 221. Specifically, a length of the first aligning portion 22 is substantially equal to that of each of the two short lateral edges 14, and the first aligning portion 22 protrudes out of one of the two short lateral edges 14 having the notch 141. The first positioning holes 221 are arranged on a part of the first aligning portion 22 closer to an edge of the first aligning portion 22 than to the first main portion 21 (e.g., a bottom part of the first aligning portion 22 as shown in Fig. 11). The first positioning holes 221 are staggeredly arranged in two rows, and each of the two rows of the first positioning holes 221 is substantially perpendicular to each of the two long lateral edges 13, but the present disclosure is not limited thereto.

It should be noted that the first aligning portion 22 of the first release film 2 has a folding trace 223, which is perpendicular to each of the two long lateral edges 13 and is arranged between the first main portion 21 and the first positioning holes 221. The folding trace 223 in the present embodiment is arranged adjacent to the screen film 1. In other words, the folding trace 223 is arranged between the screen film 1 and the first positioning holes 221, so that when the first aligning portion 22 of the first release film 2 is being torn away from the partition 4 to an extent of arriving a position of the folding trace 223, the folding trace 223 can provide a resistance for a user to know that the tearing position of the first release film 2 is close to the screen film 1.

The second release film 3 in the present embodiment is integrally formed as a one-piece structure, and includes a second main portion 31 and a second aligning portion 32 connected to the second main portion 31. The second main portion 31 substantially corresponds in shape to the screen film 1. That is to say a peripheral edge of the second main portion 31 is substantially aligned with the peripheral edge of the screen film 1. The second main portion 31 is detachably adhered to the second surface 12 of the screen film 1.

Moreover, the second aligning portion 32 protrudes out of the screen film 1. The second aligning portion 32 has a plurality of second positioning holes 321, so that the screen film structure 100 can be provided with a positioning function by the second positioning holes 321. Specifically, a length of the second aligning portion 32 is substantially equal to that of each of the two short lateral edges 14, and the second aligning portion 32 protrudes out of one of the two short lateral edges 14 having the notch 141. The second positioning holes 321 are arranged on a part of the second aligning portion 32 closer to an edge of the second aligning portion 32 than to the second main portion 31 (e.g., a bottom part of the second aligning portion 32 as shown in Fig. 11). The second positioning holes 321 are staggeredly arranged in two rows, and each of the two rows of the second positioning holes 321 is substantially perpendicular to each of the two long lateral edges 13, but the present disclosure is not limited thereto.

Specifically, the first release film 2 and the second release film 3 in the present embodiment are of the same structure or symmetrical structure. A peripheral edge of the second aligning portion 32 is substantially aligned with that of the first aligning portion 22. The first aligning portion 22 and the second aligning portion 32 are respectively and detachably adhered to the two opposite surfaces of the partition 4. The peripheral edge of the partition 4 excluding the edge 41 is substantially aligned with each of the peripheral edge of the first aligning portion 22 and the peripheral edge of the second aligning portion 32. Moreover, the second positioning holes 321 are respectively aligned with the first positioning holes 221, and the thru-holes 42 are respectively aligned with the first positioning holes 221. A contour of the first release film 2 is substantially identical to that of the second release film 3, and is also substantially identical to a contour that is jointly defined by the screen film 1 and the partition 4.

Accordingly, the first aligning portion 22 of the first release film 2 and the second aligning portion 32 of the second release film 3 are provided to be arranged protruding out of the screen film 1, and are formed with two rows of positioning holes (i.e., the first positioning holes 221 and the second positioning holes 321 respectively aligned with the first positioning holes 221), so that the screen film structure 100 can be provided with a better positioning function by the two rows of the positioning holes. Moreover, the screen film structure 100 is provided with the partition 4 in complementation with the screen film 1 and sandwiched between the first aligning portion 22 and the second aligning portion 32, so that the first aligning portion 22 and the second aligning portion 32 can be easily torn away from each other through the partition 4.

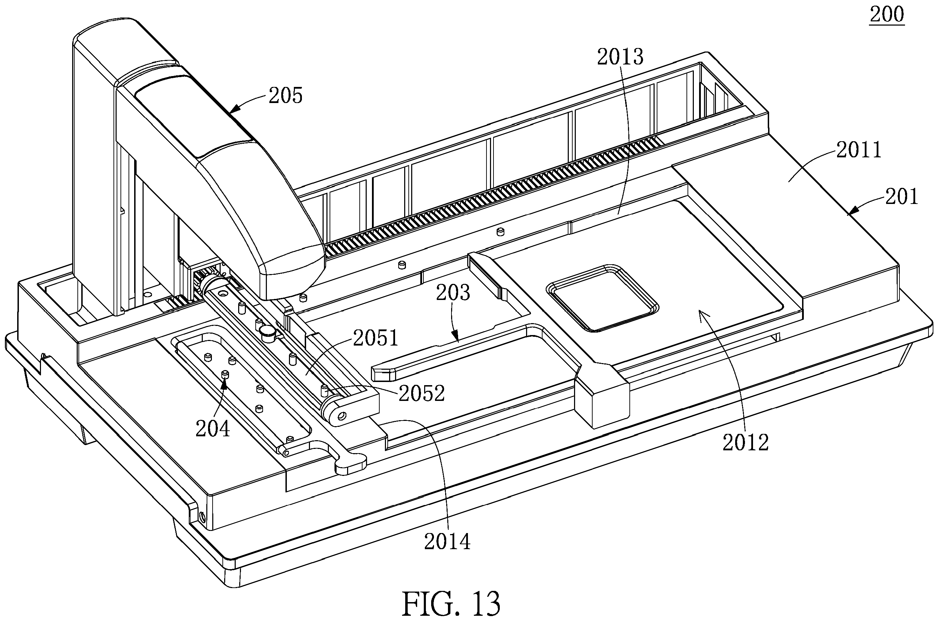

The screen film structure 100 has been disclosed in the above description, and the following description discloses the method of the present embodiment. As shown in Figs. 13 to 16, the method of the present embodiment includes a preparing step, a clamping step, a film aligning step, and an attaching step. The above steps can be adjusted or changed according to design requirements, and the method of the present disclosure is not limited thereto.

Referring to Fig. 13, the preparing step is implemented by providing a screen film applicator 200 and the screen film structure 100. The structure of the screen film applicator 200 is briefly disclosed as follows, but the present disclosure is not limited thereto. The screen film applicator 200 includes a seat 201, a plurality of first fixing pillars 204, a clamping mechanism 203, and a film attaching mechanism 205.

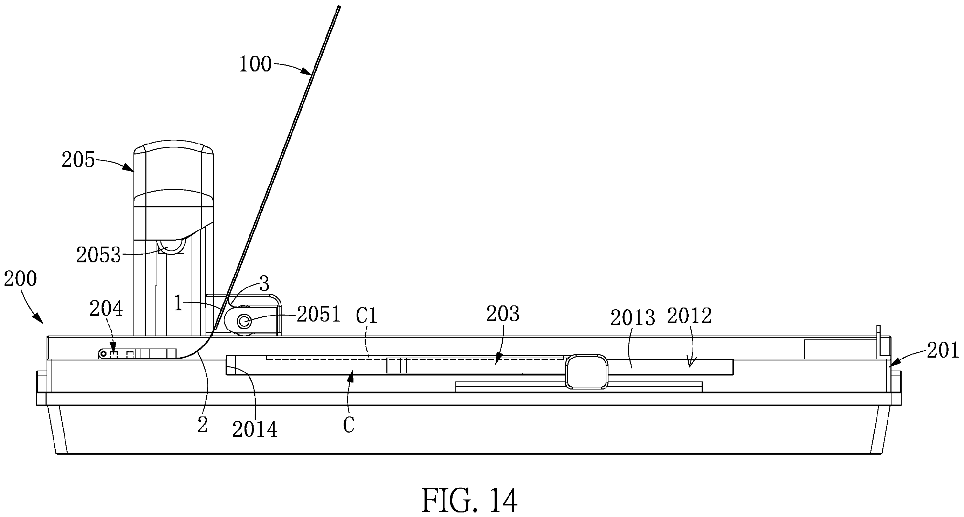

Specifically, the seat 201 includes an accommodating trough 2012 recessed in a top surface 2011 thereof, and the accommodating trough 2012 has a long inner wall 2013 and a short inner wall 2014 substantially perpendicular to the long inner wall 2013. The first fixing pillars 204 extend from the top surface 2011 of the seat 201 and are arranged adjacent to the short inner wall 2014 of the seat 201. The clamping mechanism 203 is movably arranged in the accommodating trough 2012. The film attaching mechanism 205 is movably disposed on the seat 201. The film attaching mechanism 205 includes a rolling shaft 2051, a plurality of second fixing pillars 2052 formed on the rolling shaft 2051, and a flatly pressing roller 2053 (as shown in Fig. 14). When the film attaching mechanism 205 is moved along a longitudinal direction of the long inner wall 2013 relative to the seat 201, the rolling shaft 2051 spins around an axis of the rolling shaft 205, and the flatly pressing roller 2053 spins around an axis of the flatly pressing roller 2053.

Referring to Fig. 14, the clamping step is implemented by placing a mobile device C in the accommodating trough 2012 of the seat 201 and using the clamping mechanism 203 to press the mobile device C to abut against the long inner wall 2013 and the short inner wall 2014 of the seat 201. Moreover, a screen C1 of the mobile device C faces toward a direction away from the seat 2012, and a side of the mobile device C (e.g., the left side of the mobile device C as shown in Fig. 14) is located between the first fixing pillars 204 and the clamping mechanism 203. In certain embodiments, the side of the mobile device C located between the first fixing pillars 204 and the clamping mechanism 203 is a side of the mobile device C that is further away from the clamping mechanism 203 than another side of the mobile device C opposite to the side is.

Referring to Figs. 14, 13, and 11, the film aligning step is implemented by taking the first release film 2 to dispose the first fixing pillars 204 in the first positioning holes 221 of the first release film 2 and taking the second release film 3 to dispose the second fixing pillars 2052 in the second positioning holes 321 of the second release film 3, and then removing the partition 4 located between the first release film 2 and the second release film 3. Moreover, the rolling shaft 2051 and the flatly pressing roller 2053 are respectively located at two opposite sides of the screen film 1 (e.g., as shown in Fig. 14, the rolling shaft 2051 is located at right side of the screen film 1, and the flatly pressing roller 2053 is located at left side of the screen film 1). In addition, the first aligning portion 22 is folded along the folding trace 223 to maintain the connection between the first main portion 21 and the first surface 11 of the screen film 1.

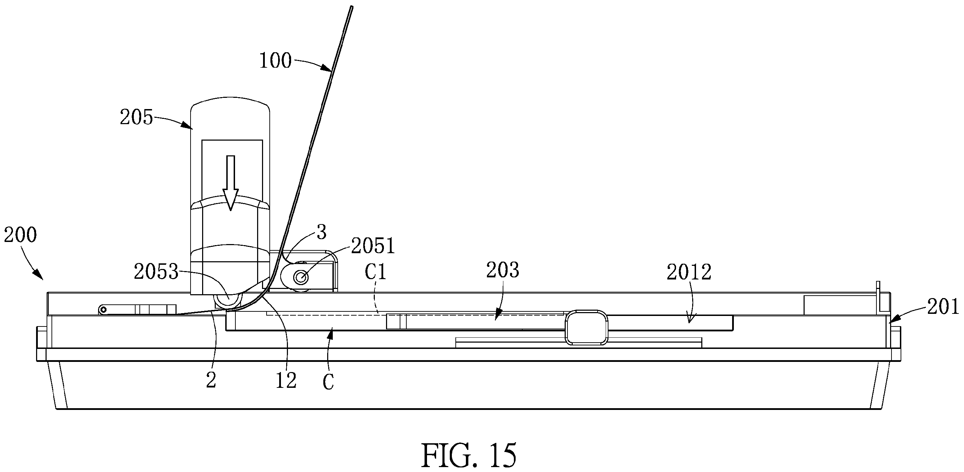

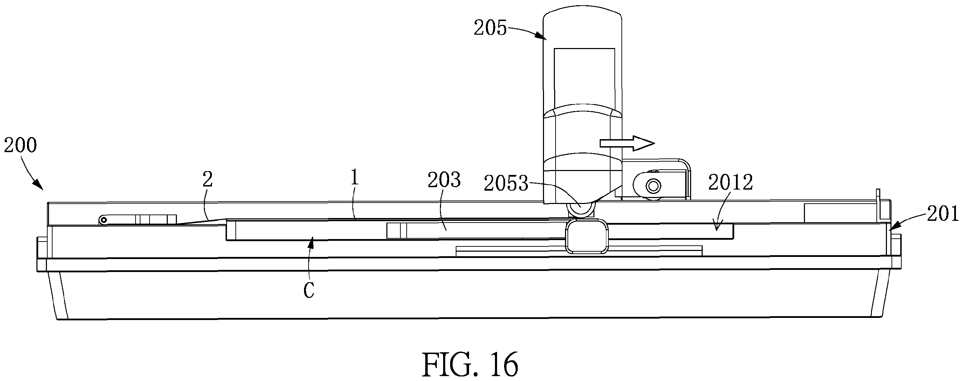

Referring to Figs. 15 and 16, the attaching step is implemented by moving the film attaching mechanism 205 toward the clamping mechanism 203 (e.g., as shown in Fig. 15, the flatly pressing roller 2053 is pressed downwardly and is moved toward a right side), so that the rolling shaft 2051 spins to gradually tear the second release film 3 away from the second surface 12 of the screen film 1 and to roll the second release film 3 around the rolling shaft 2051, and the flatly pressing roller 2053 spins to gradually presses the second surface 12 of the screen film 1 onto the screen C1 of the mobile device C from an end to an opposite end of the screen C1. Finally, the first release film 2 is torn away from the first surface 11 of the screen film 1, thereby obtaining a mobile device C accurately adhered with the screen film 1.

It should be noted that the screen film structure 100 is applied by implementing the method of the present embodiment, but the present disclosure is not limited thereto. In other embodiments of the present disclosure, the screen film structure 100 can be applied to a mobile device C by implementing other methods.

### Third Embodiment

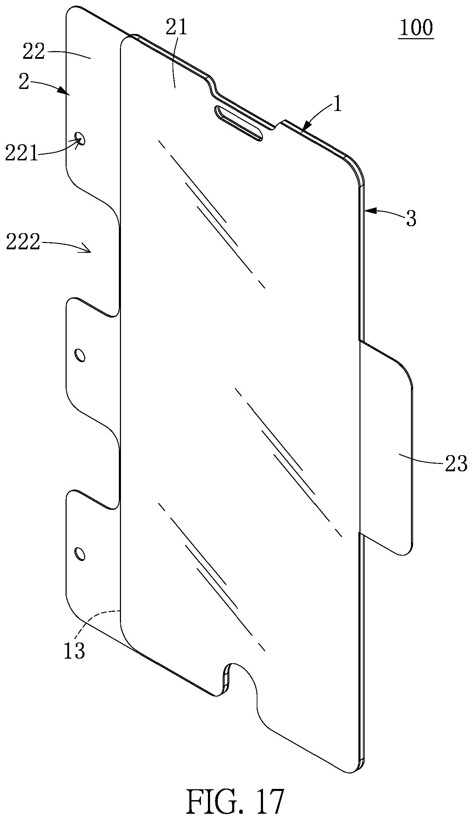

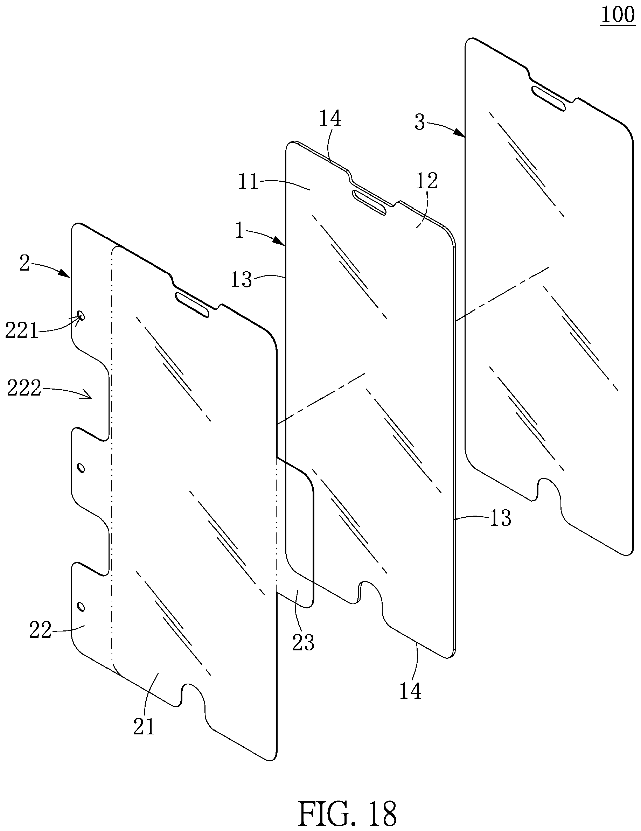

Reference is made to Figs. 17 and 18, which illustrate a third embodiment of the present disclosure. The third embodiment is similar to the first embodiment, and the difference between the third embodiment and the first embodiment is disclosed in the following description.

In the present embodiment, the first release film 2 further includes a protruding portion 23 connected to the first main portion 21, and the protruding portion 23 and the first aligning portion 22 respectively protrude out of the two long lateral edges 13 of the screen film 1.

Therefore, when the screen film structure 100 of the present embodiment is applied by implementing the method, a user can pinch the protruding portion 23 of the screen film structure 100 for stably placing the screen film structure 10 to the screen film applicator 200 in the film aligning step. For example, in the film aligning step, the screen film structure 100 of the present embodiment can be hold by pinching the protruding portion 23, so that each of the first positioning holes 221 is not squeezed for maintaining the original shape thereof.

### Fourth Embodiment

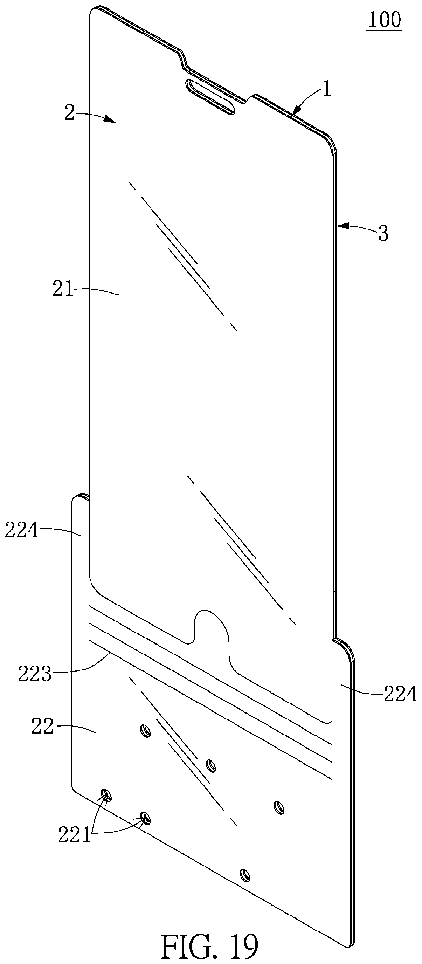

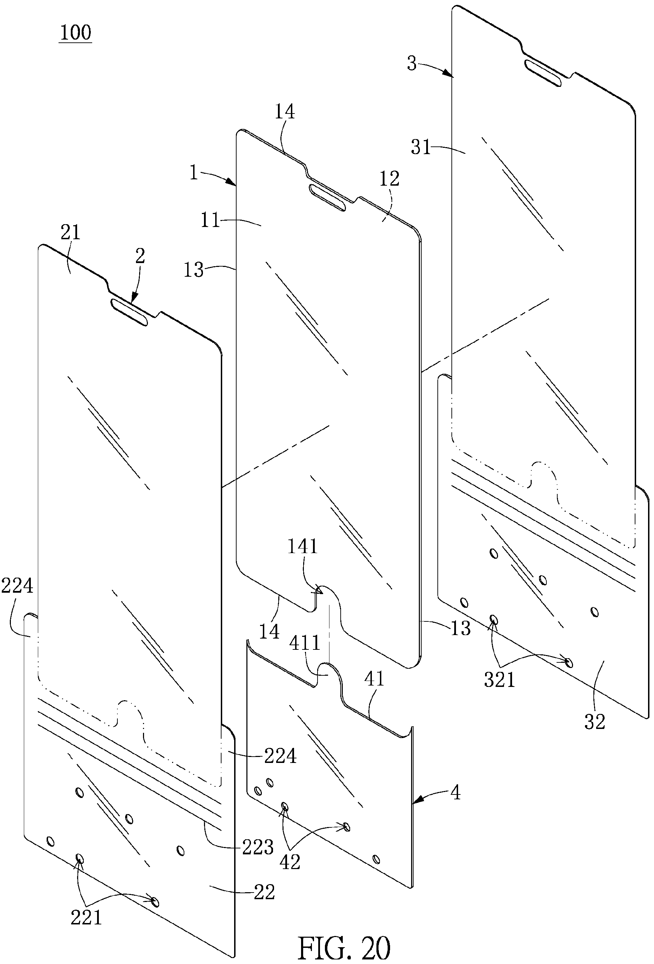

Reference is made to Figs. 19 and 20, which illustrate a fourth embodiment of the present disclosure. The fourth embodiment is similar to the second embodiment, and the difference between the fourth embodiment and the second embodiment is disclosed in the following description.

In the present embodiment, the first aligning portion 22 further includes two reinforcing segments 224 connected to the first main portion 21, and the two reinforcing segments 224 respectively protrude out of a portion of the two long lateral edges 13 arranged adjacent to the first aligning potion 22. Each of the two reinforcing segments 224 has a length that is preferably 10-40% of a length of each of the two long lateral edges 13.

Moreover, a contour of the first release film 2 is substantially identical to that of the second release film 3, and is also identical to a contour jointly defined by the screen film 1 and the partition 4. That is to say, each of the second release film 3 and the partition 4 further includes two reinforcing segments (not labeled) respectively corresponding in shape and position to the two reinforcing segments 224 of the first aligning portion 22.

Therefore, when the screen film structure 100 of the present embodiment is applied by implementing the method, since the first aligning portion 22 (and the second aligning portion 32) is formed with the two reinforcing segments 224, the first aligning portion 22 (and the second aligning portion 32) can be firmly fastened to the screen film applicator 200 in the film aligning step, and an offset between the screen film 1 and the first aligning portion 22 (or the second aligning portion 32) can be avoided.

### The technical effects from the present embodiments

In summary, the screen film structure of the present disclosure is provided with a positioning function by forming a plurality of first positioning holes on the first aligning portion of the first release film protruding out of the screen film, thereby effectively improving the drawback associated with conventional screen film, which cannot be accurately adhered onto a screen due to observation error or finger jitter.

Moreover, for the screen film structure of the first embodiment, since a portion of the first aligning portion between any two of the first positioning holes arranged adjacent to each other includes a fingertip trough recessed in an outer edge of the first aligning portion, so that the fingertip troughs of the first release film can provide a space for a user's fingers to hold the screen film structure. Each of the fingertip troughs has a bottom spaced apart from the screen film, so that when the screen film structure is hold by pinching the bottom of each of the fingertip troughs and an edge of the screen film structure opposite to the first aligning portion, the screen film and each of the first positioning holes are not squeezed for maintaining the original shape thereof.

In addition, for the screen film structure of the second embodiment, the first aligning portion and the second aligning portion are provided to be arranged protruding out of the screen film, and are formed with two rows of positioning holes (i.e., the first positioning holes and the second positioning holes respectively aligned with the first positioning holes), so that the screen film structure can be provided with a better positioning function by the two rows of the positioning holes. Moreover, the screen film structure is provided with the partition in complementation with the screen film and sandwiched between the first aligning portion and the second aligning portion, so that the first aligning portion and the second aligning portion can be easily torn away from each other through the partition. Furthermore, the first aligning portion can be formed with a folding trace, so that when the first aligning portion of the first release film is being torn away from the partition to an extent of arriving a position of the folding trace, the folding trace can provide a resistance for a user to know that the tearing position of the first release film is close to the screen film.

The descriptions illustrated *supra* set forth simply the preferred embodiments of the present disclosure; however, the characteristics of the present disclosure are by no means restricted thereto. All changes, alterations, or modifications conveniently considered by those skilled in the art are deemed to be encompassed within the scope of the present disclosure delineated by the following claims.

## Claims

1. A screen film structure, comprising:
a transparent screen film (1) having a first surface (11) and a second surface (12) opposite to the first surface (11);
a first release film (2) including:
a first main portion (21) detachably adhered to the first surface (11) of the screen film (1), wherein a peripheral edge of the first main portion (21) is substantially aligned with a peripheral edge of the screen film (1); and
a first aligning portion (22) connected to the first main portion (21) and protruding out of the screen film (1), wherein the first aligning portion (22) has a plurality of first positioning holes (221); and
a second release film (3) detachably adhered to the second surface (12) of the screen film (1),
wherein the screen film (1) is a soft screen film, the peripheral edge of the screen film (1) includes two long lateral edges (13) parallel to each other and two short lateral edges (14) parallel to each other, the first aligning portion (22) protrudes out of one of the two short lateral edges (14), the first positioning holes (221) are staggeredly arranged in two rows, and each of the two rows of the first positioning holes (221) is substantially perpendicular to each of the two long lateral edges (13), and wherein each of the first release film (2) and the second release film (3) is a bendable soft release film, and the second release film (3) includes:
a second main portion (31) detachably adhered to the second surface (12) of the screen film (1), wherein a peripheral edge of the second main portion (21) is substantially aligned with the peripheral edge of the screen film (1); and
a second aligning portion (32) connected to the second main portion (31) and protruding out of the screen film (1), wherein the second aligning portion (32) has a plurality of second positioning holes (321) arranged closer to an edge of the second aligning portion (32) than to the second main portion (31), and the second positioning holes (321) are respectively aligned with the first positioning holes (221).

2. The screen film structure as claimed in claim 1, further comprising a partition (4) having a peripheral edge, wherein the first aligning portion (22) and the second aligning portion (32) are respectively and detachably adhered to two opposite surfaces of the partition (4), a portion (41) of the peripheral edge of the partition is in complementation with one of the two short lateral edges (14) of the screen film (1), and the other portion of the peripheral edge of the partition (4) is substantially aligned with each of the peripheral edge of the first aligning portion (22) and the peripheral edge of the second aligning portion (32), and wherein the partition (4) has a plurality of thru-holes (42) respectively aligned with the first positioning holes (221).

3. The screen film structure as claimed in claim 1, wherein the first aligning portion (22) includes two reinforcing segments (224) connected to the first main portion (21), and the two reinforcing segments (224) respectively protrude out of a portion of the two long lateral edges (13) arranged adjacent to the first aligning potion (22).

4. The screen film structure as claimed in claim 3, wherein each of the two reinforcing segments (224) has a length that is 10-40% of a length of each of the two long lateral edges (13).

5. A method for attaching a screen film (1) onto a mobile device (C), comprising:
a preparing step implemented by providing a screen film applicator (200) and the screen film structure (100) as claimed in claim 1, wherein the screen film applicator (200) includes:
a seat (201) including an accommodating trough (2012) recessed in a top surface (2011) thereof, the accommodating trough (2012) having a long inner wall (2013) and a short inner wall (2014);
a plurality of first fixing pillars (204) extending from the top surface (2011) of the seat (201) and arranged adjacent to the shot inner wall (2014) of the seat (201);
a clamping mechanism (203) movably arranged in the accommodating trough (2012); and
a film attaching mechanism (205) movably disposed on the seat (201) and including a rolling shaft (2051), a plurality of second fixing pillars (2052) formed on the rolling shaft (2051), and a flatly pressing roller (2053), wherein when the film attaching mechanism (205) is moved along a longitudinal direction of the long inner wall (2013) relative to the seat (201), the rolling shaft (2051) spins around an axis of the rolling shaft (2051), and the flatly pressing roller (2053) spins around an axis of the flatly pressing roller (2053);
a clamping step implemented by placing a mobile device (C) in the accommodating trough (2012) and using the clamping mechanism (203) to press the mobile device (C) to abut against the long inner wall (2013) and the short inner wall (2014), wherein a screen (C1) of the mobile device (C) faces toward a direction away from the seat (201), and a side of the mobile device (C) is located between the first fixing pillars (204) and the clamping mechanism (203) and is further away from the clamping mechanism (203) than another side of the mobile device (C) opposite to the side of the mobile device (C) is;
a film aligning step implemented by taking the first release film (2) to dispose the first fixing pillars (204) in the first positioning holes (221) and taking the second release film (3) to dispose the second fixing pillars (2052) in the second positioning holes (321), wherein the rolling shaft (2051) and the flatly pressing roller (2053) are respectively located at two opposite sides of the screen film (1); and
an attaching step implemented by moving the film attaching mechanism (205) toward the clamping mechanism (203), so that the rolling shaft (2051) spins to gradually tear the second release film (3) away from the second surface (12) of the screen film (1) and to roll the second release film (3) around the rolling shaft (2051), and the flatly pressing roller (2053) spins to gradually presses the second surface (12) of the screen film (1) onto the screen (C1) of the mobile device (C) from an end to an opposite end of the screen (C1).

6. The method as claimed in claim 5, wherein the screen film structure (100) further comprises a partition (4) having a peripheral edge, wherein the first aligning portion (22) and the second aligning portion (32) are respectively and detachably adhered to two opposite surfaces of the partition (4), a portion (41) of the peripheral edge of the partition (4) is in complementation with one of the two short lateral edges (14) of the screen film (1), and the other portion of the peripheral edge of the partition (4) is substantially aligned with each of a peripheral edge of the first aligning portion (22) and a peripheral edge of the second aligning portion (32), wherein the partition (4) has a plurality of thru-holes (42) respectively aligned with the first positioning holes (221), and wherein after the film aligning step, the partition (4) is removed.

## Patentansprüche

1. Bildschirmfolienstruktur, aufweisend:
eine transparente Bildschirmfolie (1), welche eine erste Fläche (11) und eine zweite Fläche (12) hat, welche entgegengesetzt zu der ersten Fläche (11) ist,
eine erste Ablösefolie (2), aufweisend:
einen ersten Hauptabschnitt (21), welcher ablösbar an der ersten Fläche (11) der Bildschirmfolie (1) haftet, wobei ein Umfangsrandbereich des ersten Hauptabschnitts (21) im Wesentlichen mit einem Umfangsrandbereich der Bildschirmfolie (1) ausgerichtet ist, und
einen ersten Ausrichtungsabschnitt (22), welcher mit dem ersten Hauptabschnitt (21) verbunden ist und aus der Bildschirmfolie (1) herausragt, wobei der erste Ausrichtungsabschnitt (22) eine Mehrzahl von ersten Positionierungslöchern (221) hat, und
eine zweite Ablösefolie (3), welche ablösbar an der zweiten Fläche (12) der Bildschirmfolie (1) haftet,
wobei die Bildschirmfolie (1) eine weiche Bildschirmfolie ist, der Umfangsrandbereich der Bildschirmfolie (1) zwei Lange-Seite-Ränder (13), welche parallel zueinander sind, und zwei Kurze-Seite-Ränder (14) aufweist, welche parallel zueinander sind, der erste Ausrichtungsabschnitt (22) aus einem von den beiden Kurze-Seite-Rändern (14) herausragt, der erste Ausrichtungsabschnitt (22) aus einem der beiden Kurze-Seite-Ränder (14) herausragt, die ersten Positionierungslöcher (221) in zwei Reihen versetzt angeordnet sind, und jede von den zwei Reihen der ersten Positionierungslöcher (221) im Wesentlichen senkrecht zu jedem von den zwei Lange-Seite-Rändern (13) ist, und wobei jede von der ersten Ablösefolie (2) und der zweiten Ablösefolie (3) eine biegbare, weiche Ablösefolie ist, und
wobei die zweite Ablösefolie (3) aufweist:
einen zweiten Hauptabschnitt (31), welcher ablösbar an der zweiten Fläche (12) der Bildschirmfolie (1) haftet, wobei ein Umfangsrandbereich des zweiten Hauptabschnitts (21) im Wesentlichen mit dem Umfangsrandbereich der Bildschirmfolie (1) ausgerichtet ist, und
einen zweiten Ausrichtungsabschnitt (32), welcher mit dem zweiten Hauptabschnitt (31) verbunden ist und aus der Bildschirmfolie (1) herausragt, wobei der zweite Ausrichtungsabschnitt (32) eine Mehrzahl von zweiten Positionierungslöchern (321) hat, welche näher an einem Randbereich des zweiten Ausrichtungsabschnitts (32) als an dem zweiten Hauptabschnitt (31) angeordnet sind, und die zweiten Positionierungslöcher (321) in jeweils zugeordneter Weise mit den ersten Positionierungslöchern (221) ausgerichtet sind.

2. Bildschirmfolienstruktur gemäß Anspruch 1, welche ferner eine Trennvorrichtung (4) aufweist, welche einen Umfangsrandbereich hat, wobei der erste Ausrichtungsabschnitt (22) und der zweite Ausrichtungsabschnitt (32) in jeweils zugeordneter Weise und ablösbar an zwei entgegengesetzten Flächen der Trennvorrichtung (4) haften, wobei ein Abschnitt (41) des Umfangsrandbereichs der Trennvorrichtung komplementär zu einer von den zwei Kurze-Seite-Rändern (14) der Bildschirmfolie (1) ist, und der andere Abschnitt des Umfangsrandbereichs der Trennvorrichtung (4) im Wesentlichen mit jedem von den Umfangsrandbereich des ersten Ausrichtungsabschnitts (22) und dem Umfangsrandbereich des zweiten Ausrichtungsabschnitts (32) ausgerichtet ist, und wobei die Trennvorrichtung (4) eine Mehrzahl von Durchgangslöchern (42) hat, welche in jeweils zugeordneter Weise mit den ersten Positionierungslöchern (221) ausgerichtet sind.

3. Bildschirmfolienstruktur gemäß Anspruch 1, wobei der erste Ausrichtungsabschnitt (22) zwei Verstärkungssegmente (224) aufweist, welche mit dem ersten Hauptabschnitt (21) verbunden sind, und die zwei Verstärkungssegmente (224) in jeweils zugeordneter Weise aus einem Abschnitt von den zwei Lange-Seite-Rändern (13) herausragen, welche benachbart zu dem ersten Ausrichtungsabschnitt (22) angeordnet sind.

4. Bildschirmfolienstruktur gemäß Anspruch 3, wobei jedes von den zwei Verstärkungssegmenten (224) eine Länge hat, welche 10-40% von einer Länge von jedem von den zwei Lange-Seite-Rändern (13) beträgt.

5. Verfahren zum Anbringen einer Bildschirmfolie (1) auf einem Mobilgerät (C), aufweisend:
einen Vorbereitungsschritt, welcher realisiert wird mittels Bereitstellens einer Bildschirmfolie-Aufbringungsvorrichtung (200) und der Bildschirmfolienstruktur (100) gemäß Anspruch 1, wobei die Bildschirmfolie-Aufbringungsvorrichtung (200) aufweist:
einen Sitz (201), welcher eine Aufnahmemulde (2012) aufweist, welche in eine obere Fläche (2011) desselben eingelassen ist, wobei die Aufnahmemulde (2012) eine lange Innenwand (2013) und eine kurze Innenwand (2014) hat,
eine Mehrzahl von ersten Fixiersäulen (204), welche sich von der oberen Fläche (2011) des Sitzes (201) aus erstrecken und benachbart zu der kurzen Innenwand (2014) des Sitzes (201) angeordnet sind,
einen Klemmmechanismus (203), welcher bewegbar in der Aufnahmemulde (2012) angeordnet ist, und
einen Folienbefestigungsmechanismus (205), welcher bewegbar an dem Sitz (201) angeordnet ist und eine Rollwelle (2051), eine Mehrzahl von zweiten Fixiersäulen (2052), welche an der Rollwelle (2051) gebildet sind, und eine Flachdrückrolle (2053) aufweist, wobei, wenn der Folienbefestigungsmechanismus (205) entlang einer Longitudinalrichtung der langen Innenwand (2013) relativ zu dem Sitz (201) bewegt wird, sich die Rollwelle (2051) um eine Achse der Rollwelle (2051) dreht und sich die Flachdrückrolle (2053) um eine Achse der Flachdrückrolle (2053) dreht,
einen Klemmschritt, welcher realisiert wird mittels Platzierens eines Mobilgerätes (C) in der Aufnahmemulde (2012) und Verwendens des Klemmmechanismus (203), um das Mobilgerät (C) zu drücken, um an der langen Innenwand (2013) und der kurzen Innenwand (2014) anzuliegen, wobei ein Bildschirm (C1) des Mobilgerätes (C) in eine Richtung weg von dem Sitz (201) weist, und eine Seite des Mobilgerätes (C) zwischen den ersten Fixiersäulen (204) und dem Klemmmechanismus (203) angeordnet ist und weiter von dem Klemmmechanismus (203) entfernt ist als eine andere Seite des Mobilgerätes (C), welche entgegengesetzt zu der Seite des Mobilgerätes (C) ist,
einen Folienausrichtungsschritt, welcher realisiert wird mittels Nehmens der ersten Ablösefolie (2), um die ersten Fixiersäulen (204) in den ersten Positionierungslöchern (221) anzuordnen, und Nehmens der zweiten Ablösefolie (3), um die zweiten Befestigungssäulen (2052) in den zweiten Positionierungslöchern (321) anzuordnen, wobei die Rollwelle (2051) und die Flachdrückrolle (2053) in jeweils zugeordneter Weise an zwei entgegengesetzten Seiten der Bildschirmfolie (1) angeordnet sind, und
einen Anbringungsschritt, welcher realisiert wird mittels Bewegens des Folienbefestigungsmechanismus (205) in Richtung zu dem Klemmmechanismus (203), so dass sich die Rollwelle (2051) dreht, um die zweite Ablösefolie (3) sukzessive von der zweiten Fläche (12) der Bildschirmfolie (1) abzuziehen und die zweite Ablösefolie (3) um die Rollwelle (2051) herum zu rollen, und wobei sich die Flachdrückrolle (2053) dreht, um sukzessive die zweite Fläche (12) der Bildschirmfolie (1) auf den Bildschirm (C1) des Mobilgerätes (C) von einem Ende zu einem entgegengesetzten Ende des Bildschirms (C1) zu drücken.

6. Verfahren gemäß Anspruch 5, wobei die Bildschirmfolienstruktur (100) ferner eine Trennvorrichtung (4) aufweist, welche einen Umfangsrandbereich hat, wobei der erste Ausrichtungsabschnitt (22) und der zweite Ausrichtungsabschnitt (32) in jeweils zugeordneter Weise und ablösbar an zwei gegenüberliegenden Flächen der Trennvorrichtung (4) haften, ein Abschnitt (41) des Umfangsrandbereichs der Trennvorrichtung (4) zu einem von den zwei Kurze-Seite-Rändern (14) der Bildschirmfolie (1) komplementär ist, und der andere Abschnitt des Umfangsrandbereichs der Trennvorrichtung (4) im Wesentlichen mit jedem von einem Umfangsrandbereich des ersten Ausrichtungsabschnitts (22) und einem Umfangsrandbereich des zweiten Ausrichtungsabschnitts (32) ausgerichtet ist, wobei die Trennvorrichtung (4) eine Mehrzahl von Durchgangslöchern (42) hat, welche jeweils mit den ersten Positionierungslöchern (221) ausgerichtet sind, und
wobei nach dem Folienausrichtungsschritt die Trennvorrichtung (4) entfernt wird.

## Revendications

1. Structure de film d'écran, comprenant :
un film d'écran transparent (1) ayant une première surface (11) et une seconde surface (12) opposée à la première surface (11) ;
un premier film de séparation (2), comprenant :
une première partie principale (21) collée de manière détachable à la première surface (11) du film d'écran (1), un bord périphérique de la première partie principale (21) étant sensiblement aligné avec un bord périphérique du film d'écran (1) ; et
une première partie d'alignement (22) connectée à la première partie principale (21) et faisant saillie hors du film d'écran (1), la première partie d'alignement (22) ayant une pluralité de premiers trous de positionnement (221) ; et
un second film de séparation (3) collé de manière détachable à la seconde surface (12) du film d'écran (1),
où le film d'écran (1) est un film d'écran souple, le bord périphérique du film d'écran (1) comprend deux bords latéraux longs (13) parallèles l'un à l'autre et deux bords latéraux courts (14) parallèles l'un à l'autre, la première partie d'alignement (22) fait saillie hors de l'un des deux bords latéraux courts (14), les premiers trous de positionnement (221) sont disposés de manière décalée en deux rangées, et chacune des deux rangées des premiers trous de positionnement (221) est sensiblement perpendiculaire à chacun des deux bords latéraux longs (13), et où chacun du premier film de séparation (2) et du second film de séparation (3) est un film de séparation souple pliable, et le second film de séparation (3) comprend :
une seconde partie principale (31) collée de manière détachable à la seconde surface (12) du film d'écran (1), un bord périphérique de la seconde partie principale (21) étant sensiblement aligné avec le bord périphérique du film d'écran (1) ; et
une seconde partie d'alignement (32) connectée à la seconde partie principale (31) et faisant saillie hors du film d'écran (1), la seconde partie d'alignement (32) ayant une pluralité de seconds trous de positionnement (321) disposés plus près d'un bord de la seconde partie d'alignement (32) que de la seconde partie principale (31), et les seconds trous de positionnement (321) étant respectivement alignés avec les premiers trous de positionnement (221).

2. Structure de film d'écran selon la revendication 1, comprenant en outre une cloison (4) ayant un bord périphérique, dans laquelle la première partie d'alignement (22) et la seconde partie d'alignement (32) sont respectivement et de manière détachable collées à deux surfaces opposées de la cloison (4), une partie (41) du bord périphérique de la cloison est en complémentarité avec l'un des deux bords latéraux courts (14) du film d'écran (1), et l'autre partie du bord périphérique de la cloison (4) est sensiblement alignée avec chacun du bord périphérique de la première partie d'alignement (22) et du bord périphérique de la seconde partie d'alignement (32), et dans laquelle la cloison (4) comporte une pluralité de trous traversants (42) respectivement alignés avec les premiers trous de positionnement (221).

3. Structure de film d'écran selon la revendication 1, dans laquelle la première partie d'alignement (22) comprend deux segments de renforcement (224) reliés à la première partie principale (21), et les deux segments de renforcement (224) font respectivement saillie hors d'une partie des deux bords latéraux longs (13) disposés de manière adjacente à la première partie d'alignement (22).

4. Structure de film d'écran selon la revendication 3, dans laquelle chacun des deux segments de renforcement (224) a une longueur qui est de 10-40% d'une longueur de chacun des deux bords latéraux longs (13).

5. Procédé de fixation d'un film d'écran (1) sur un dispositif mobile (C), comprenant :
une étape de préparation mise en œuvre en fournissant un applicateur de film d'écran (200) et la structure de film d'écran (100) selon la revendication 1, l'applicateur de film d'écran (200) comprenant :
un siège (201) comprenant une auge de réception (2012) évidée dans une surface supérieure (2011) de celui-ci, l'auge de réception (2012) ayant une paroi intérieure longue (2013) et une paroi intérieure courte (2014) ;
une pluralité de premiers piliers de fixation (204) s'étendant à partir de la surface supérieure (2011) du siège (201) et disposés de manière adjacente à la paroi intérieure courte (2014) du siège (201) ;
un mécanisme de serrage (203) disposé de manière mobile dans l'auge de réception (2012) ; et
un mécanisme de fixation de film (205) disposé de manière mobile sur le siège (201) et comprenant un arbre de roulement (2051), une pluralité de seconds piliers de fixation (2052) formés sur l'arbre de roulement (2051), et un rouleau de pression à plat (2053), où, lorsque le mécanisme de fixation de film (205) est déplacé le long d'une direction longitudinale de la paroi intérieure longue (2013) par rapport au siège (201), l'arbre de roulement (2051) tourne autour d'un axe de l'arbre de roulement (2051), et le rouleau de pression à plat (2053) tourne autour d'un axe du rouleau de pression à plat (2053) ;
une étape de serrage mise en œuvre en plaçant un dispositif mobile (C) dans l'auge de réception (2012) et en utilisant le mécanisme de serrage (203) pour presser le dispositif mobile (C) pour qu'il vienne en butée contre la paroi intérieure longue (2013) et la paroi intérieure courte (2014), où un écran (C1) du dispositif mobile (C) est orienté vers une direction s'éloignant du siège (201), et un côté du dispositif mobile (C) est situé entre les premiers piliers de fixation (204) et le mécanisme de serrage (203) et est plus éloigné du mécanisme de serrage (203) qu'un autre côté du dispositif mobile (C) opposé au côté du dispositif mobile (C) ;
une étape d'alignement de film mise en œuvre en prenant le premier film de séparation (2) pour disposer les premiers piliers de fixation (204) dans les premiers trous de positionnement (221) et en prenant le second film de séparation (3) pour disposer les seconds piliers de fixation (2052) dans les seconds trous de positionnement (321), où l'arbre de roulement (2051) et le rouleau de pression à plat (2053) sont respectivement situés sur deux côtés opposés du film d'écran (1) ; et
une étape de fixation mise en œuvre en déplaçant le mécanisme de fixation de film (205) vers le mécanisme de serrage (203), de sorte que l'arbre de roulement (2051) tourne pour arracher progressivement le second film de séparation (3) de la seconde surface (12) du film d'écran (1) et pour enrouler le second film de séparation (3) autour de l'arbre de roulement (2051), et le rouleau de pression à plat (2053) tourne pour presser progressivement la seconde surface (12) du film d'écran (1) sur l'écran (C1) du dispositif mobile (C) d'une extrémité à une extrémité opposée de l'écran (C1).

6. Procédé selon la revendication 5, dans lequel la structure de film d'écran (100) comprend en outre une cloison (4) ayant un bord périphérique, où la première partie d'alignement (22) et la seconde partie d'alignement (32) sont respectivement et de manière détachable collées à deux surfaces opposées de la cloison (4), une partie (41) du bord périphérique de la cloison (4) est en complémentarité avec l'un des deux bords latéraux courts (14) du film d'écran (1), et l'autre partie du bord périphérique de la cloison (4) est sensiblement alignée avec chacun d'un bord périphérique de la première partie d'alignement (22) et d'un bord périphérique de la seconde partie d'alignement (32), où la cloison (4) a une pluralité de trous traversants (42) respectivement alignés avec les premiers trous de positionnement (221), et
où, après l'étape d'alignement de film, la cloison (4) est retirée.
